(19) Europäisches Patentamt
European Patent Office
Office européen des brevets

(11) **EP 1 522 871 B1**

(12) **FASCICULE DE BREVET EUROPEEN**

(45) Date de publication et mention
de la délivrance du brevet:
**21.02.2007 Bulletin 2007/08**

(51) Int Cl.:
***G01S 13/00*** *(2006.01)*

(21) Numéro de dépôt: **04104886.9**

(22) Date de dépôt: **05.10.2004**

(54) **Radar à formation de voies d'écartométrie synthétiques**

Radar mit synthetischen Peilkanälen

Radar with synthetic direction finding channels

(84) Etats contractants désignés:
**AT BE BG CH CY CZ DE DK EE ES FI FR GB GR
HU IE IT LI LU MC NL PL PT RO SE SI SK TR**

(30) Priorité: **10.10.2003 FR 0311895**

(43) Date de publication de la demande:
**13.04.2005 Bulletin 2005/15**

(73) Titulaire: **Thales
92200 Neuilly Sur Seine (FR)**

(72) Inventeurs:
  • **CORNIC, Pascal
    94117 CX, ARCUEIL (FR)**
  • **ARTIS, Jean-Paul
    94117 CX, ARCUEIL (FR)**
  • **LE BIHAN, Patrick
    94117 CX, ARCUEIL (FR)**
  • **KEMKEMIAN, Stéphane
    94117 CX, ARCUEIL (FR)**

(74) Mandataire: **Lucas, Laurent Jacques et al
Marks & Clerk France
31-33 Avenue Aristide Briand
94117 Arcueil Cedex (FR)**

(56) Documents cités:
**US-A- 4 387 373          US-A- 4 825 213**

  • **NOHARA T J: "Derivation of a 3-channel DPCA/
    monopulse radar using phased arrays"
    TELESYSTEMS CONFERENCE, 1994.
    CONFERENCE PROCEEDINGS., 1994 IEEE
    NATIONAL SAN DIEGO, CA, USA 26-28 MAY
    1994, NEW YORK, NY, USA,IEEE, 26 mai 1994
    (1994-05-26), pages 243-246, XP010121644 ISBN:
    0-7803-1869-2**

**Description**

La présente invention concerne un radar à formation de voies d'écartométrie synthétiques. Elle s'applique notamment pour des radars aéroportés, ou plus généralement mobiles, à visée latérale.

Dans le domaine des radars aéroportés fonctionnant en mode air-sol, il est souvent demandé de détecter et de localiser avec une bonne précision des cibles mobiles, évoluant parfois à très faible vitesse par rapport au sol. Ces détections et localisation sont réalisées à l'aide de traitements cohérents connus de type MTI selon l'expression anglo-saxonne « Moving Target Indicator ». Pour des raisons d'économie, on peut chercher à faire avec un même radar et notamment avec une même antenne une détection de type MTI et une détection de type SAR (Side Aperture Radar). Ainsi, dans le cas d'un aéronef par exemple, un système radar à bas coût peut comporter une seule antenne, fixe par rapport au porteur et équipée d'une seule voie de réception, une telle antenne comportant un axe de visée latérale, par exemple perpendiculaire par rapport à la vitesse de déplacement du porteur.

Ces deux fonctions, détection de type MTI et surveillance de type SAR, peuvent conduire à des incompatibilités de réalisation. En effet, dans un traitement de type SAR, il est souhaitable d'avoir la meilleure résolution transversale possible. Cette résolution est notamment donnée par la relation L/2 où L est la longueur de l'antenne. Cela implique notamment une longueur d'antenne L la plus faible possible, ce qui entraîne un faisceau d'antenne large. Or de son côté, un traitement MTI nécessite plutôt un faisceau d'antenne étroit avec des lobes secondaires les plus réduits possibles.

Une autre contrainte qui s'oppose à une solution économique telle que définie précédemment est la détection de cibles lentes parmi les échos de sol. En effet, la détection de cibles lentes dans le clutter peut nécessiter la mise en oeuvre de filtrages spatio-temporels adaptatifs ou non, réalisable uniquement si le radar dispose de deux ou plusieurs faisceaux d'antenne différents et canaux de réception associés.

On connaît un radar de voies d'écartométrie comportant des moyens de traitement de résolution Doppler, et équipé d'une antenne comportant une voie d'émission et de réception de signaux, comme décrit dans l'article de T. Nohara : « Derivation of a 3-channel DPCA/monopulse radar using phased arrays » Telesystems conference 1994. Conference proceedings, 1994 IEEE National San Diego, CA, USA 26-28 May 1994, New York, NY, USA IEEE, 26 May 1994, pages 243-246.

Un but de l'invention est notamment de permettre la réalisation d'un radar équipé d'une antenne comportant le moins de canaux de réception possibles, par exemple un seul, et qui conserve les meilleures performances de détections. A cet effet, l'invention a pour objet un radar à voie(s) d'écartométrie synthétique(s) comportant des moyens de traitement de résolution Doppler, équipé d'une antenne comportant au moins une voie d'émission et de réception de signaux. Le faisceau d'antenne est dépointé dans n directions différentes, le faisceau étant dépointé d'une récurrence à la suivante, une voie synthétique $S_1$, $S_2$, ...$S_n$ comportant les signaux reçus dans une direction donnée, une voie d'écartométrie synthétique étant obtenue par combinaison d'une première voie synthétique $S_1$ et d'une deuxième voie synthétique extrapolée $S_2$, l'extrapolation de la deuxième voie $S_2$ étant effectuée dans le domaine fréquentiel en multipliant le résultat obtenu dans chaque filtre Doppler par un coefficient complexe fonction de l'ordre du filtre et du retard $\tau$ entre les deux voies synthétiques $S_1$, $S_2$. les origines des temps pour le calcul des deux séries de filtres associées chacune à une voie sont décalées de ce retard $\tau$.

L'invention a pour principaux avantages qu'elle peut s'appliquer à de nombreuses applications radar et qu'elle est simple à mettre en oeuvre.

D'autres caractéristiques et avantages de l'invention apparaîtront à l'aide de la description qui suit faite en regard de dessins annexés qui représentent :

- la figure 1, par une forme simplifiée une antenne se déplaçant par rapport au sol ;
- la figure 2, les lobes d'antennes, principal et secondaires de l'antenne de la figure précédente ;
- la figure 3, une illustration du principe de fonctionnement d'un radar selon l'invention ;
- la figure 4, par un synoptique une architecture d'un radar selon l'invention ;
- la figure 5, la position de l'antenne précédente à deux instants correspondant aux débuts de deux récurrences successives ;
- la figure 6, un exemple de dépointage du faisceau d'antenne d'un radar selon l'invention ;
- la figure 7 une illustration du recalage d'une voie synthétique sur une autre ;
- la figure 8, un exemple d'extrapolation de signaux dans une voie de réception synthétique ;
- les figures 9a et 9b des filtres Doppler dans le domaine fréquentiel obtenu par traitement dans un radar selon l'invention.

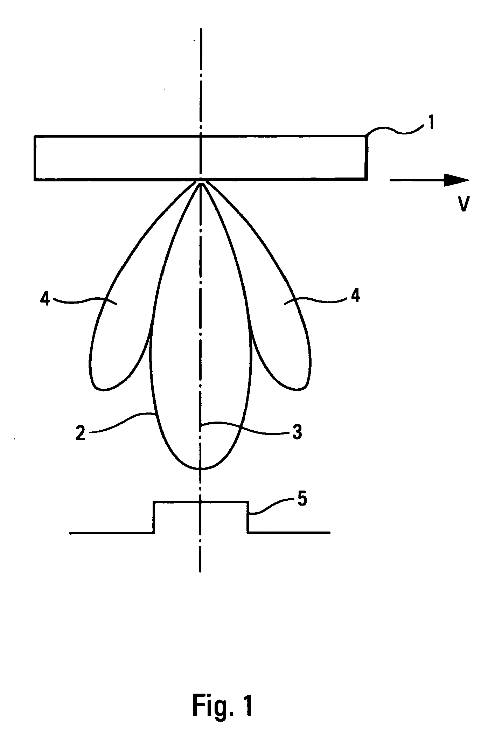

La figure 1 présente sous forme simplifiée une antenne 1 se déplaçant par rapport au sol à une vitesse V. Cette antenne comporte un lobe principal 2 autour de son axe 3. Ce lobe principal est entouré de lobes secondaires 4. Le faisceau d'antenne constitué du lobe principal 2 balaie donc le sol. L'antenne est fixée sur un porteur mobile, par exemple un aéronef. L'antenne est par ailleurs reliée à des moyens d'émission et de réception d'un radar. Ce dernier émet via l'antenne un signal impulsionnel 5. Le radar et son antenne 1 sont par exemple aéroportés, une mission du radar étant la détection de cibles au sol.

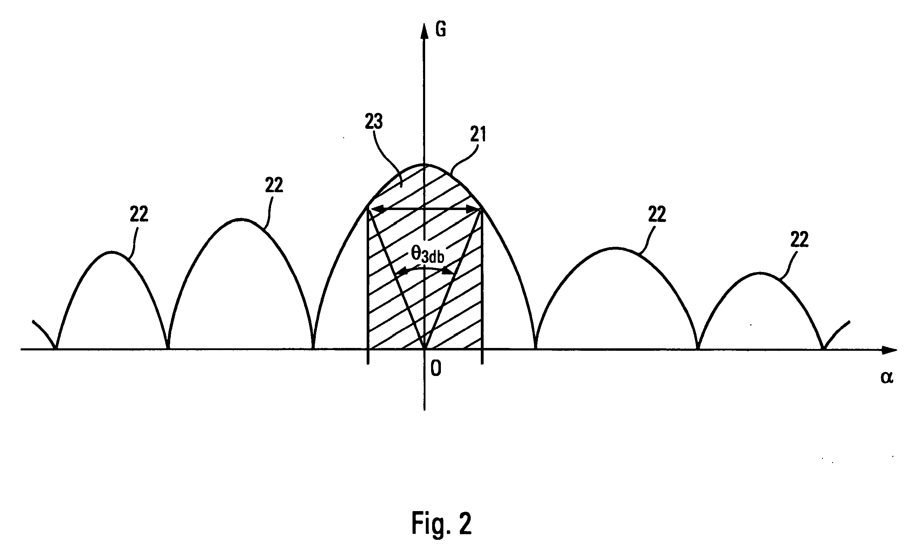

La figure 2 montre par une autre forme de représentation les lobes de l'antenne de la figure 1. Plus particulièrement cette figure représente classiquement ces lobes par leur gain G en fonction de l'angle de visée $\alpha$ par rapport à l'axe 3 de l'antenne, encore appelé axe radioélectrique. Le gain G suit une courbe en sinx / x, centrée sur l'axe d'antenne correspondant à $\alpha=0$. Ceci correspond à un exemple d'antenne sans pondération d'ouverture. Le lobe principal 21 passant par le point d=0 comporte une zone dite endoclutter 23. Le clutter de cette zone correspond aux échos de sol dans le lobe principal dus au déplacement de l'antenne 1.

Avec un traitement classique, on obtient une zone endoclutter. Cette zone endoclutter 23 a comme conséquence qu'il existe une vitesse minimum de cible en dessous de laquelle on ne peut pas détecter. La largeur de la bande endoclutter 23 peut être définie par un angle de l'ordre de $k_0$ fois son angle à 3dB noté $\theta_{3dB}$. On sait par ailleurs que la fréquence Doppler $f_d$ en fonction de la vitesse $v_c$ d'une cible et la longueur d'onde radar $\lambda$ est donnée par la relation suivante :

$$f_d = \frac{2v_c}{\lambda} \qquad\qquad (1)$$

Avec la zone d'endoclutter 23 telle qu'illustrée par la figure 2, il y a une largeur de spectre inutilisable due au déplacement de cette zone. En effet toute cible couverte par cette zone en déplacement ne sera pas détectée. La vitesse de la zone endoclutter est égale à $V\sin(\theta_{3dB})$ où V est la vitesse de l'antenne 1. Etant donnée la faible valeur de $\theta_{3dB}$, le domaine vitesse de la zone endoclutter peut être considérée comme étant égale à $V\theta_{3dB}$. La largeur de spectre inutilisable $\Delta F$ peut donc être donnée par la relation suivante :

$$\Delta F = \frac{2V\theta_{3dB}}{\lambda} k_0 \qquad\qquad (2)$$

La constante $k_0$ peut être comprise entre 1 et 2,5. Elle dépend notamment du sol et des résolutions Doppler ou distance du radar. Par la suite pour faciliter la description, on se place dans le cas où $k_0 = 1$.

Pour un exemple d'application où la vitesse V est égale à 50m/s, la longueur d'onde $\lambda$ est égale à 3 cm et $\theta_{3dB}$ égale à 85 milliradian correspondant à 5˚, la largeur de spectre inutilisable $\Delta F$ est de l'ordre de 300 Hz, soit en pratique $\pm 150$ Hz. Cela correspond en se référant à la relation (1) à une vitesse minimum de cible $V_{cmin}$ de l'ordre de 2,2 m/s en dessous de laquelle aucune détection n'est possible. Toutes les cibles ayant des vitesses inférieures sont alors couvertes par la zone endoclutter 23.

Pour réduire l'effet de la zone endoclutter, il faut diminuer la largeur du lobe d'antenne pour réduire l'angle $\theta_{3dB}$, et donc diminuer $\Delta F$. Pour obtenir un tel résultat, il suffit d'augmenter la largeur d'antenne, et donc incidemment le coût. Néanmoins les applications de type SAR nécessitent une largeur de lobe la plus grande possible. En particulier la résolution transversale est directement liée à la grandeur U2 où L est la largeur de l'antenne. Il faut donc dans ce cas une antenne de faible largeur. Il y a donc contradiction entre les applications de détection MTI et de surveillance SAR

L'utilisation d'une seule antenne pour les deux applications pose donc un problème. A ce problème s'ajoute un problème de localisation en cas d'utilisation d'un seul canal de réception. En effet dans ce cas la précision de localisation brute est égale à $Rx\theta_{3dB}$ où R représente la distance de l'antenne à la cible. En prenant R = 10 km et $\theta_{3dB}$ = 85 milliradian, on obtient une résolution égale à 850 mètres, ce qui n'est pas satisfaisant. Une autre voie de réception, en particulier une voie d'écartométrie est alors nécessaire pour améliorer la précision de localisation. Deux voies de réception sont donc au minimum nécessaires.

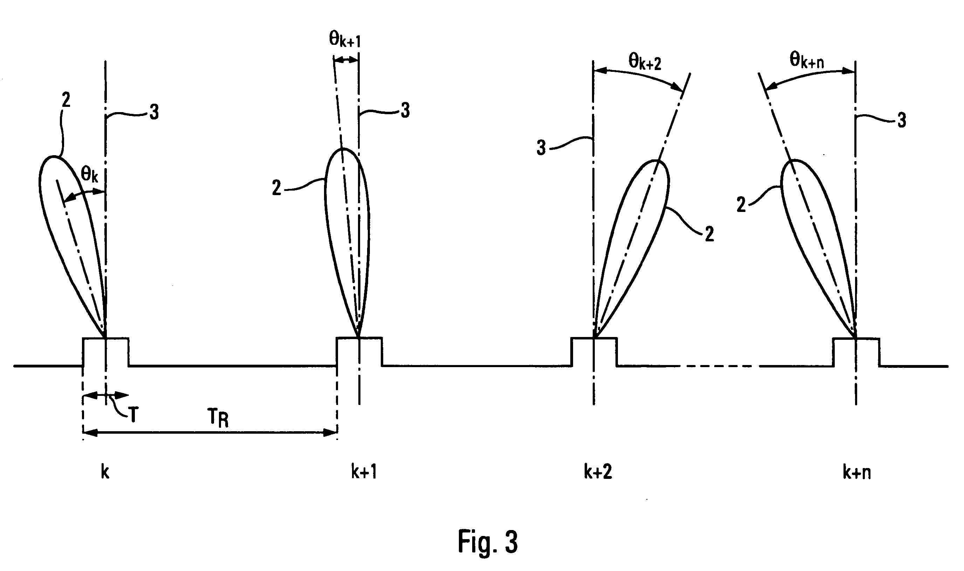

La figure 3 illustre le principe de fonctionnement d'un radar selon l'invention. Le radar élabore de façon séquentielle n canaux d'émission/réception radar $S_1$ à $S_n$ correspondant respectivement à des gains $G_1$ à $G_n$ en pointant successivement, de récurrence à récurrence l'antenne radar dans n directions différentes $\theta_k$, $\theta_{k+1}$, $\theta_{k+2}$, ... $\theta_{k+n}$.

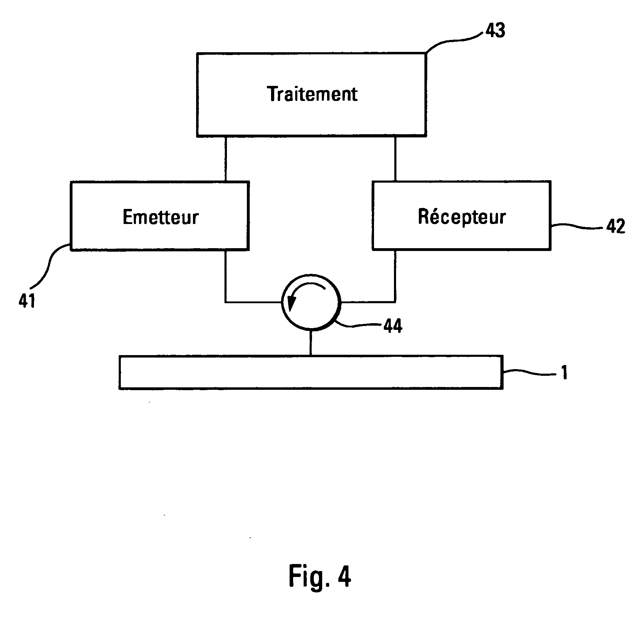

La figure 4 illustre par un synoptique l'architecture du radar. Celle-ci peut être classique. Le radar comporte un émetteur 41, un récepteur 42 et des moyens de traitement 43. Ces moyens de traitement sont reliés à l'émetteur et au récepteur par des circuits d'interface et de contrôle non représentés. L'émetteur et le récepteur sont reliés à l'antenne 1 par un circulateur hyperfréquence 44. Le radar est par exemple aéroporté et fonctionne en mode air/sol sans ambiguïté Doppler, en visée latérale. L'antenne 1 est dirigée vers le sol selon un angle d'inclinaison en site fixe par exemple. Cette antenne 1 balaye le sol en azimut par balayage électronique, par exemple à module actif, de sorte qu'il est possible de commuter le faisceau d'antenne très rapidement. Il est alors notamment possible d'orienter le faisceau d'antenne dans deux directions différentes au cours de deux récurrences radar successives. L'antenne 1 pourrait aussi balayer le sol en élévation avec le même principe.

La figure 3 illustre le fonctionnement d'un radar selon l'invention pour n récurrences radar successives d'ordres k, k+1, k+2, ... k+n. La période de récurrence est $T_R$. Chaque récurrence comporte une impulsion radar de durée T. Dans la récurrence d'ordre k le faisceau d'antenne 2 est pointé dans une direction donnée faisant un angle $\theta_k$ avec l'axe d'antenne. Puis aux récurrences d'ordres k+1, k+2, ... k+n le faisceau 2 est pointé respectivement dans des directions successives faisant respectivement des angles $\theta_{k+1}$, $\theta_{k+2}$, ... $\theta_{k+n}$ avec l'axe d'antenne. A la récurrence k+n le faisceau d'antenne revient dans la même direction que celle de la récurrence k, c'est-à-dire que $\theta_k=\theta_{k+n}$. Le pas de dépointage est par exemple de l'ordre de la largeur à 3dB du lobe d'antenne. Dans un cas d'application tel qu'illustré par la figure 1 les dépointages $\theta_k$, $\theta_{k+1}$, $\theta_{k+2}$, ... $\theta_{k+n}$ se font par exemple en azimut. On peut bien sûr envisager des applications avec ces mêmes dépointages en site.

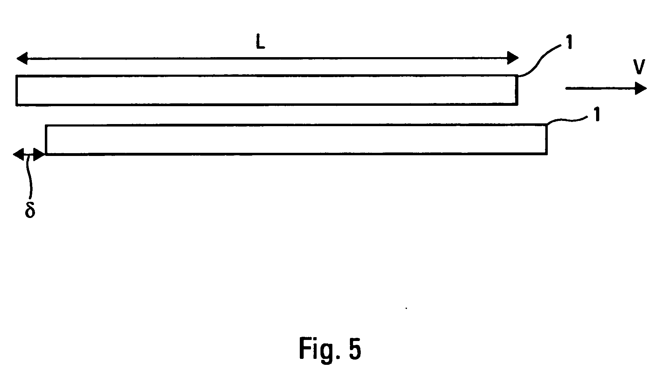

A titre d'exemple, la durée d'impulsion T = 10$\mu$s et la période de récurrence $T_R$ = 100$\mu$s. De préférence, la fréquence de récurrence 1/$T_R$ est supposée très élevée par rapport à la vitesse du porteur de façon à ce que le déplacement de l'antenne pendant un petit nombre de récurrence, par exemple 2 ou 3, soit lui-même très faible par rapport à la dimension de l'antenne dans la direction du déplacement comme le montre la figure 5.

La figure 5 illustre donc la position de l'antenne 1 à deux instants correspondant aux débuts de deux récurrences successives. L'antenne à une largeur L. Entre deux récurrences successives elle se déplace d'une distance $\delta$ dans la direction du vecteur vitesse V de l'antenne. Le déplacement $\delta$ est faible devant la largeur L de l'antenne. A titre d'exemple, on peut considérer une vitesse V de 50 m/s, une période de récurrence $T_R$ de 100$\mu$s et une longueur d'antenne L de 40 cm. Pendant une période de récurrence, l'amplitude du déplacement est alors de 0,5 cm et de 1,5 cm pendant trois périodes de récurrence, soit environ 1/30$^{\text{ème}}$ de la longueur de l'antenne. Dans ces conditions l'angle sous lequel est vu un point quelconque du sol varie peu pendant deux récurrences du fait du déplacement du radar. Ainsi à 3 kilomètres, qui correspond à la portée minimum, l'angle de vue varie au maximum de 1,5 cm/3km soit 5x10$^{-6}$ radian. Ceci est vrai également pour la variation d'angle de vue lié au déplacement propre de la cible, dans les cas usuels. Si l'antenne est pointée dans la même direction aux instants t=k$T_R$ et t=(k+n)$T_R$, par exemple n=2 ou n=3, le gain d'antenne en amplitude dans une direction donnée peut donc être considéré comme identique à ces deux instants k$T_R$ et (k+n)$T_R$. En effet, dans les cas classiques, la variation d'angle de vue est alors négligeable devant l'ouverture de l'antenne.

Ainsi, dans le cas de la figure 3 et selon les hypothèses précédentes, le gain d'antenne en amplitude dans une direction donnée peut donc être considéré comme identique à la récurrence k et à la récurrence k+3, en prenant n=3. En considérant une ouverture d'antenne de 5° ou 0,087 radian, il s'ensuit une variation relative de 5,7x10$^{-5}$ dans un intervalle de temps de trois récurrences.

Par ailleurs, on peut considérer que le radar se déplace à une altitude sensiblement constante, à une vitesse V relativement lente par rapport au sol. Dans cette hypothèse, le radar ne présente pas d'ambiguïté Doppler vis-à-vis des échos de sol ni vis-à-vis des cibles utiles en échantillonnant le signal reçu à intervalles de temps réguliers de quelques récurrences, par exemple deux ou trois. A titre d'exemple, en considérant que :

- la vitesse de radar V=50m/s ;
- le domaine éclairé par le lobe principal d'antenne en azimut est réduit, ce qui est le cas en général, ce domaine étant défini par un angle $\theta_z$ en radian ;
- la vitesse maximum de la cible $v_{cmax}$=30m/s ;
- la longueur d'onde du radar $\lambda$ = 3cm ;

la bande Doppler des échos de sol vus par le lobe principal en azimut est égale à $\dfrac{2V\theta_z}{\lambda}$.

La rotation de phase maximum des échos de sol, dans le lobe principal, entre n récurrences successives correspondant à cette bande est donc égales à $\dfrac{2n\pi V\theta_z}{\lambda}T_R$.

Ainsi, pour $T_R$=100$\mu$s et n=2, la rotation de phase est égale à 0,029$\pi$. Pour $T_R$=100$\mu$s et n=3, la rotation de phase est égale à 0,029$\pi$.

De même, la rotation de phase maximum sur une cible entre n récurrences est égale à $\dfrac{2n\pi V_{cmax}}{\lambda}T_R$, soit 0,4$\pi$ pour n=2 et 0,6 $\pi$ pour n=3.

Dans ces conditions, il est possible à partir des signaux reçus échantillonnés aux récurrences $kT_R$ et/ou $(k+n)$ $T_R$ d'estimer la phase des mêmes signaux à un instant quelconque compris entre ces deux instants d'échantillonnage, par exemple $(k+1)T_R$, pour chaque fréquence Doppler possible.

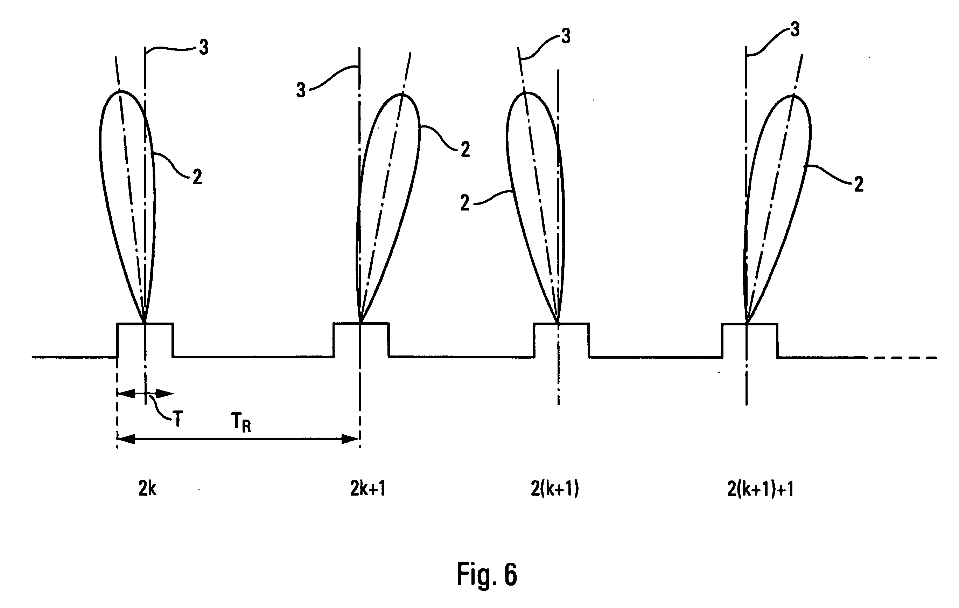

La figure 6 illustre un exemple de fonctionnement d'un radar selon l'invention. Un radar selon l'invention pointe successivement l'antenne dans n directions différentes, de récurrence à récurrence, autour d'une valeur moyenne angulaire 3. Le nombre n de directions peut être petit, par exemple 2 ou 3, de façon notamment à ce que les hypothèses faites précédemment soient respectées. Dans le cas de la figure 6, le nombre de directions est n=2. Par ailleurs, le pas de dépointage de la valeur moyenne en azimut est par exemple égal à la demi-largeur du faisceau à 3 dB, soit un angle de dépointage égal à $\theta_{3dB}/2$. Ce dépointage est réalisé de façon continue ou discrète. Dans ce dernier cas il est incrémenté de cycle de traitement à cycle de traitement, un cycle de traitement comportant N récurrence, N étant par exemple égal à 128. Cette commutation de faisceau s'inscrit par exemple dans un cycle de balayage global permettant de couvrir l'ensemble du domaine de détection.

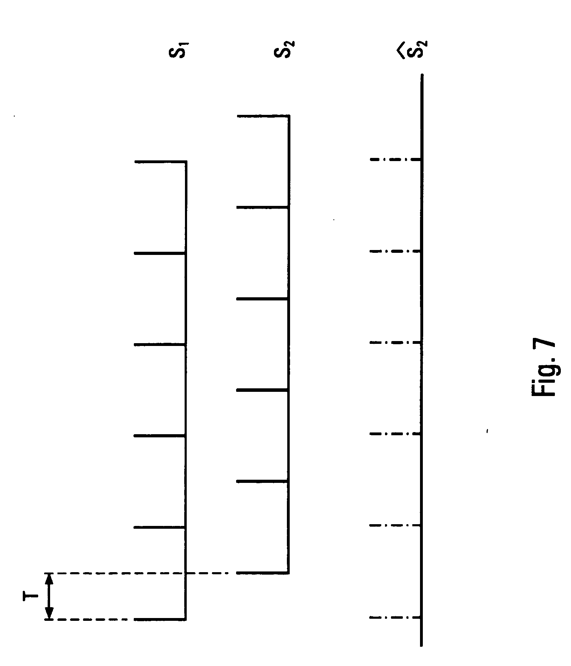

L'antenne utilisée est du type de celle de la figure 1 avec un seul canal d'émission/réception. Les dépointages successifs de chaque côté de l'axe d'antenne 3 sont donc $-\theta_{3dB}/2$ et $+\theta_{3dB}/2$. Pour les récurrences d'ordre pair 2k, le dépointage est par exemple $-\theta_{3dB}/2$ et pour les récurrences d'ordre impair 2k+1 le dépointage est par exemple $+\theta_{3dB}/2$. On obtient ainsi deux séries de signaux reçus $S_1(2k)$ et $S_2(2k+1)$. Un radar selon l'invention traite ces deux séries de signaux comme s'ils provenaient de deux voies d'émission et de réception différentes en recalant une voie sur l'autre pour que les signaux ainsi échantillonnés aient la même origine des temps. La figure 7 illustre ce décalage. Du fait que les signaux réels échantillonnés sont retenus une période d'échantillonnage sur deux dans chaque voie $S_1$, $S_2$ les échantillons de la deuxième voie $S_2$ sont décalés d'une période d'échantillonnage T par rapport aux échantillons de la première voie $S_1$. La voie extrapolée $\hat{S}_2$ est donc recalée sur la voie $S_1$ pour que les échantillons des deux voies aient la même origine des temps. De cette façon, les signaux échantillonnés de même ordre correspondent à un même instant d'échantillonnage.

Un signal $S_1(2k)$ est émis et reçu dans une première voie $S_1$ et un signal $S_2(2k+1)$ est émis et reçu dans une deuxième voie $S_2$. Dans ce cas, chaque voie $S_1$, $S_2$ reçoit seulement un signal sur deux. Les autres signaux sont obtenus par estimation. Ainsi, en considérant la première voie $S_1$, pour obtenir la totalité des récurrences, les signaux $S_1(2k+1)$ sont estimés. Pour un nombre 2N de récurrences nécessaires à l'intégration des signaux par les moyens de traitement radar, la suite de signaux traités par la voie $S_1$ est donc :

$$S_1(2k), \hat{S}_1(2k+1), S_1(2k+2) \ldots\ldots$$

où $S_1(2k+1)$ est la valeur estimée du signal pour une récurrence d'ordre 2k+1. De même, pour la deuxième voie $S_2$ traite les signaux :

$$S_2(2k+1), \hat{S}_2(2k+2), S_2(2k+3), \ldots\ldots$$

Un premier exemple d'estimation peut être une extrapolation définie par la relation suivante :

$$\hat{S}_1(2k+1) = \frac{S_1(2k) + S_1(2k+2)}{2} \qquad\qquad (3)$$

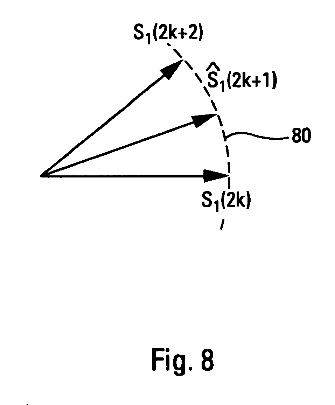

Une telle extrapolation est illustrée par la figure 8, les grandeurs représentatives des signaux $S_1(2k)$ et $S_1(2k+2)$ sont des grandeurs vectorielles et sont définies par :

$$S_1(k) = G_1(k)e^{j\varphi_k} \qquad\qquad (4)$$

$G_1(k)$ et $\varphi_k$ étant respectivement le gain et la phase du signal reçu dans la voie $S_1$. Dans les hypothèses retenues précédemment, on peut estimer que le gain reste constant entre les récurrences 2k et 2k+2. En raison du déphasage $\varphi_{2k} - \varphi_{2k+2}$ entre les vecteurs $S_1(2k)$ et $S_1(2k+2)$, le module du vecteur $\hat{S}_1(2k+1)$ correspond à la demi-somme de ces modules. En d'autres termes, ces modules représentant les gains des signaux, le gain de $\hat{S}_1(2k+1)$ est

inférieur à 1/2 ($G_1$ + $G_1$). Avec cette extrapolation, le gain du signal extrapolé à la récurrence 2k+1 est donc inférieur aux gains des signaux aux récurrences 2k et 2k+2 alors qu'il leur est sensiblement égal. Cette extrapolation fonctionne pour les faibles vitesses du porteur mais n'est plus acceptable pour les vitesses importantes. En effet pour les petites vitesses l'arc de cercle 80 compris entre les extrémité des vecteurs $S_1$(2k) et $S_1$(2k+2) peut être confondu avec son arc auxquel appartient l'extrémité du vecteur $\hat{S}_1$(2k+1).

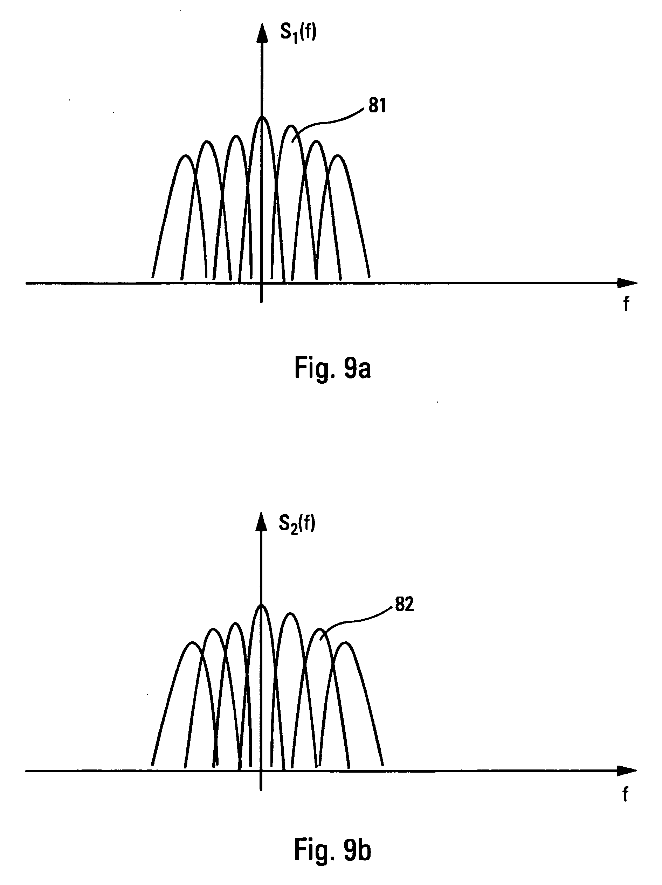

Selon l'invention, un autre type d'extrapolation peut être utilisé, plus fiable. Le temps d'intégration d'un traitement MTI, ou temps d'observation cohérent est $2NT_R$. Dans ce mode d'interpolation, les gains $G_1$(2k) et $G_2$(2k+1) sont supposés constants. A partir des signaux $S_1$(2k) et $S_2$(2k+1), le radar selon l'invention réalise une première transformée de Fourrier (FFT) sur les N points disponibles sur la voie $S_1$, donc sur les N signaux $S_1$(2k), et une deuxième transformée de Fourier sur la voie $S_2$, donc sur les N signaux $S_2$(2k+1). Deux spectres $S_1$(f) et $S_2$(f) correspondant à deux directions d'arrivée différentes, $-\theta_{3dB}/2$ et $+\theta_{3dB}/2$ par exemple, et décalés d'une récurrence sont donc obtenus. Ces spectres sont illustrés respectivement par les figures 9a et 9b dans un système d'axes où les ordonnées représentent les gains des signaux reçus et les abscisses les fréquences. Classiquement, une série de filtres doppler 81, 82 sont obtenus. Les signaux reçus des deux voies de réception sont extrapolés en phase entre deux instants d'échantillonnage successifs, en fonction de la fréquence Doppler attendue, pour toutes les fréquences Doppler possibles en tenant compte du domaine Doppler occupé par le clutter de sol et les cibles utiles. Cette interpolation est effectuée de préférence dans le domaine fréquentiel, après traitement FFT, en multipliant dans une voie de réception donnée le résultat obtenu dans chaque filtre Doppler par un coefficient complexe fonction du numéro de filtre et du retard entre les deux canaux comme indiqué ci-après.

Le temps d'observation cohérent étant égal à $2NT_R$, la résolution dans chaque filtre Doppler est $1/2NT_R$. Un filtre d'ordre i correspond à une fréquence Doppler $Fd_i$ = $i/2NT_R$. En pratique N peut être par exemple égal à 1024, l'indice i varie alors de 1 à 1024. Pour ce filtre Doppler d'ordre i, entre deux récurrences successives la rotation de phase $\Delta\varphi_i$ = $2\pi\,Fd_i\,T_R$. Etant donné que les deux spectres $S_1$(f) et $S_2$(f) des figures 8a et 8b sont décalés par exemple d'une récurrence, il suffit d'appliquer ce déphasage $\Delta\varphi i$ sur les signaux d'une des voies. En d'autres termes, si la voie $S_1$ est en avance d'une récurrence par rapport à la voie $S_2$ et que la FFT comprend N points sur une durée $2NT_R$, la sortie du filtre Doppler d'indice i de la voie $S_1$ est multipliée par $e^{j\Delta\phi_i}$, pour restituer un signal en sortie de la voie $S_1$ synchrone de la voie $S_2$. Un retard est ainsi remplacé par un déphasage et le fonctionnement est ramené à un fonctionnement avec deux voies parfaitement synchrones. Les coefficients complexes $e^{j\Delta\phi_i}$ sont avantageusement obtenus par la résolution Doppler obtenu par les moyens de traitement du radar, notamment dans le cas d'un traitement du type MTI.

Pour former un signal différence $\Delta$, on fait $S_1$ - $\hat{S}_2$ et la suite estimée $\hat{S}_2$ correspond à la suite d'échantillons initiaux $S_2$ estimés aux mêmes instants que les instants de la suite $S_1$.

Par exemple, une FFT est d'abord réalisée sur les signaux disponibles de la voie $S_1$, c'est à dire sur les échantillons des signaux reçus aux récurrences d'ordre 2k pendant la durée d'intégration $2NT_R$. De même une FFT est réalisée sur les signaux disponibles de la voie $S_2$, pour les échantillons d'ordre 2k+1. Puis l'extrapolation est faite sur la voie différence $\Delta$ comme suit :

$$\Delta(k) = S_1(k) - S_2(k+1)e^{-j\Delta\varphi_i} \qquad\qquad (5)$$

Cette écriture symbolique signifie que la voie différence $\Delta$ est obtenue par différence des signaux du domaine fréquentiel de la voie $S_1$ et de la voie $S_2$ extrapolée. L'extrapolation de la voie $S_2$ étant définie comme précédemment par multiplication des résultats de chaque filtre par le coefficient complexe $e^{-j\Delta\varphi_i}$. L'ordre k indiqué entre parenthèse pour $\Delta$ et $S_1$ et l'ordre k+1 indiqué pour $S_2$ signifient que l'origine des temps pour la FFT est prise pour la récurrence d'ordre k pour $S_1$ et que l'origine des signaux est prise pour la récurrence d'ordre k+1 pour $S_2$, plus précisément à $kT_R$ pour $S_1$ et à $(k+1)T_R$ pour $S_2$. En d'autres termes, la relation (5) implique que le résultat du filtre $\Delta_k$(f, i) de la voie différence est :

$$\Delta(f, i)_k = S_1(f,i)_k - S_2(f,i)_{k+1}e^{-j\Delta\varphi_i} \qquad\qquad (6)$$

où $S_1(f,i)_k$ représente le résultat du filtre d'ordre i pour la FFT réalisée sur les signaux de la voie $S_1$ et où $S_2(f,i)_{k+1}$ le résultat du filtre d'ordre i pour la FFT réalisée sur les signaux de la voie $S_2$. Les indices k et k+1 sur $S_1$ et $S_2$ rappellent que les deux voies sont décalées d'une récurrence.

Si l'origine des temps est prise non plus aux récurrences k et k+1, mais aux récurrences k-1 et k, la voie différence est alors obtenue selon la relation suivante :

$$\Delta(k\text{-}1) = S_1(k\text{-}1)\, e^{-j\Delta\varphi}{}_i - S_2(k) \tag{7}$$

C'est la voie $S_1$ qui est ici extrapolée en multipliant les résultats d'un filtre d'ordre i par $e^{-j\Delta\varphi}{}_i$. Avec les mêmes éléments que ceux de la relation (6), le résultat d'un filtre d'ordre i est alors défini comme suit :

$$\Delta(f,\, i)_{k\text{-}1} = S_1(f,i)_{k\text{-}1}\, e^{-j\Delta\varphi}{}_i - S_2(f,i)_k \tag{8}$$

Il est de même possible d'obtenir la voie d'écartométrie somme $\Sigma$ définie par :

$$\Sigma(k) = S_1(k) + S_2(k+1)e^{j\Delta\varphi}{}_i \tag{9}$$

ou par la relation suivante :

$$\Sigma(k\text{-}1) = S_1(k\text{-}1)\, e^{-j\Delta\varphi}{}_i + S_2(k) \tag{10}$$

Les opérations sont les mêmes que celle de la voie différence sauf que les éléments sont additionnés et non plus retranchés.

L'exemple précédent est un cas où n=2, c'est-à-dire où le faisceau est dépointé dans deux directions différentes. Il est bien sûr possible de prendre n différent. Dans le cas n=3, on peut obtenir trois voies que l'on peut combiner entre elles conformément aux relations (5) à (10) pour obtenir les voies d'écartométrie voulues. Dans ce cas le retard entre deux voies peut aller jusqu'à deux récurrences, soit $2T_R$.

Comme l'indiquent les relations (7), (8), (9) et (10) le radar exploite deux séries de filtres, une première série issus de la première voie $S_1$ et une deuxième série de filtres issus de la deuxième voie $S_2$. Ces deux séries ont le même nombre de filtres, l'ordre i variant de 1 à N. La combinaison des voies se fait en combinant entre eux les résultats des filtres de mêmes ordre, c'est-à-dire que le filtre d'ordre i de la voie $S_1$ est combiné avec le filtre d'ordre i de la voie $S_2$ sachant que pour le calcul des filtres, notamment au moyen d'une FFT, les origines des temps sont décalées d'un temps $\tau$ qui correspond au retard entre les voies. Ce retard $\tau$ est égal à une récurrence $T_R$ lorsque le nombre n de dépointages, donc de séries de filtres est égal à deux. Il peut être égal à $pT_R$, lorsque le nombre de dépointages est égal à un nombre n supérieur à deux, où p < n. A ce décalage sur l'origine des temps s'ajoute une extrapolation définie par le coefficient complexe $e^{j\Delta\varphi}{}_i$.

Ce coefficient complexe est lui-même fonction du retard. Dans l'exemple de la figure 6, où le retard entre les deux voies est d'une récurrence $T_R$, la phase $\Delta\varphi_i$ de ce coefficient complexe est égale à $2\pi\, Fd_i\, T_R$. Plus généralement, cette phase est égale à $2\pi\, Fd_i\, \tau$, où $\tau$ est le retard précité.

Il est ainsi possible selon l'invention à partir d'une seule voie physique d'émission et de réception d'obtenir une voie différence et ou une voie somme. A partir des combinaisons linéaires des signaux reconstitués issus des voies $\Delta$ et $\Sigma$, ces signaux étant pris à des instants différents, il est possible de construire un filtre blanchisseur sur le clutter du lobe principal illustré par la figure 2, plus particulièrement sur la zone endoclutter 23. Un traitement est notamment décrit dans l'ouvrage de Philippe Lacomme « Radars aéroportés et spatiaux » aux Editions Masson - 1995. Le traitement est plus particulièrement décrit pages 133 et 134 au chapitre 4.3.2.1. concernant le traitement DPCA. Il suffit d'appliquer ce traitement aux voies synthétiques d'écartométrie $\Delta$ et $\Sigma$ définies selon l'invention.

L'invention permet donc d'ajouter des voies d'écartométrie synthétiques. Dans l'exemple ci-dessus, le radar dispose d'une seule voie d'émission et de réception. L'invention s'applique évidemment à un radar possédant plus d'une voie d'émission et de réception. Ce peut être le cas par exemple d'un radar équipé d'une antenne comportant deux voies physiques. Un tel radar peut par exemple être utilisé pour faire un traitement adaptatif du type STAP (Spatio Temporal Adaptative Processing) associé à une mesure d'écartométrie. Le traitement adaptatif nécessite deux voies distinctes. Les mesures d'écartométrie peuvent alors être réalisées par la voie synthétique supplémentaire. Dans un tel cas, on réalise des fonctions radar nécessitant au moins trois voies de réception avec seulement deux voies physiques. Avantageusement, un radar selon l'invention permet d'éliminer ainsi le clutter de sol par filtrage spatio-temporel adaptatif ou non, à partir des voies d'écartométrie ainsi formées.

Avantageusement, on peut appliquer le dépointage uniquement à la réception, l'émission étant par ailleurs fixe c'est-à-dire en fait sans dépointage. Il s'ensuit une souplesse d'utilisation. Le traitement décrit précédemment l'était en azimut. Il peut bien sûr l'être en élévation. Une écartométrie endoclutter et une écartométrie exoclutter peuvent être réalisée à partir d'une seule voie de réception réalisant trois voies synthétiques, c'est-à-dire en commutant par exemple dans trois directions différentes.

L'invention peut ainsi avantageusement s'appliquer à de nombreuses applications radar. En particulier, en jouant sur le nombre de voies synthétiques. L'invention est par ailleurs simple à mettre en oeuvre dans la mesure où il n'est pas nécessaire d'ajouter du matériel supplémentaire pourvu que le radar possède des moyens de dépointage du faisceau performant ainsi que des moyens de calcul suffisant, les voies synthétiques étant obtenues par traitement. Le dépointage du faisceau d'antenne est en particulier très aisé pour les radars équipés d'antenne à balayage électronique.

**Revendications**

1. Radar à voie(s) d'écartométrie synthétique(s) comportant des moyens de traitement de résolution Doppler, équipé d'une antenne (1) comportant au moins une voie d'émission et de réception de signaux (5), **caractérisé en ce que** le faisceau d'antenne (2) est dépointé dans n directions différentes ($\theta_k$, $\theta_{k+1}$, $\theta_{k+2}$, ... $\theta_{k+n}$), le faisceau étant dépointé d'une récurrence à la suivante, une voie synthétique ($S_1$, $S_2$, ...$S_n$) comportant les signaux reçus dans une direction donnée, une voie d'écartométrie synthétique étant obtenue par combinaison d'une première voie synthétique ($S_1$) et d'une deuxième voie synthétique extrapolée ($S_2$), l'extrapolation de la deuxième voie ($S_2$) étant effectuée dans le domaine fréquentiel en multipliant le résultat obtenu dans chaque filtre Doppler par un coefficient complexe fonction de l'ordre i du filtre et du retard $\tau$ entre les deux voies synthétiques ($S_1$, $S_2$), les origines des temps pour le calcul des deux séries de filtres associées chacune à une voie étant décalées de ce retard $\tau$.

2. Radar selon la revendication 1, **caractérisé en ce que** le faisceau d'antenne (2) est dépointé à la réception.

3. Radar selon l'une quelconque des revendications 1 ou 2, **caractérisé en ce que** le faisceau d'antenne (2) est dépointé successivement dans deux directions.

4. Radar selon l'une quelconque des revendications 1 ou 2, **caractérisé en ce que** le faisceau d'antenne (2) est dépointé successivement dans trois directions.

5. Radar selon l'une quelconque des revendications précédentes **caractérisé en ce que** l'angle de dépointage du faisceau d'antenne (2) est de l'ordre de la largeur du faisceau à 3dB, $\theta_{3dB}$.

6. Radar selon l'une quelconque des revendications précédentes, **caractérisé en ce que** le coefficient complexe est $e^{j\Delta\varphi_i}$ où $\Delta\varphi_i = 2\pi$ $Fd_i$ $T_R$, $\tau$ étant la fréquence d'un filtre Doppler d'ordre i et $\tau$ le retard entre les deux voies $S_1$ et $S_2$.

7. Radar selon l'une quelconque des revendications précédentes, **caractérisée en ce qu'**une voie synthétique est une voie différence $\Delta$ obtenue par différence de la première voie synthétique ($S_1$) et de la deuxième voie synthétique extrapolée ($S_2$).

8. Radar selon l'une quelconque des revendications précédentes **caractérisé en ce qu'**une voie synthétique est une voie somme $\Sigma$ obtenue par la somme de la première voie synthétique ($S_1$) et de la deuxième voie synthétique extrapolée ($S_2$).

9. Radar selon l'une quelconque des revendications précédentes, **caractérisé en ce que** fonctionnant en mode air-sol, il élimine le clutter de sol par filtrage spatio-temporel à partir d'au moins une voie d'écartométrie synthétique.

10. Radar selon la revendication 3, cararactérisé en ce qu'il comporte une voie d'écartométrie endoclutter et une voie d'écartométrie exoclutter.

**Claims**

1. Radar with synthetic for deviation measurement channel(s) comprising Doppler resolution processing means and equipped with an antenna (1) comprising at least one channel for transmitting and receiving signals (5), **charac-**

**terized in that** the antenna beam (2) is off-bore sighted in n different directions ($\theta_k$, $\theta_{k+1}$, $\theta_{k+2}$, ... $\theta_{k+n}$), the beam being off-bore sighted from one recurrence to the next, a synthetic channel ($S_1$, $S_2$, ... $S_n$) comprising the signals received in a given direction, a synthetic direction finding channel being obtained by combination of a first synthetic channel ($S_1$) and of a second extrapolated synthetic channel ($S_2$), the extrapolation of the second channel ($S_2$) being performed in the frequency domain by multiplying the result obtained in each Doppler filter by a complex coefficient dependent on the order i of the filter and the delay $\tau$ between the two synthetic channels ($S_1$, $S_2$), the time origins for the calculation of the two filter series each associated with a channel being shifted by this delay $\tau$.

2. Radar according to Claim 1, **characterized in that** the antenna beam (2) is off-bore sighted on reception.

3. Radar according to any one of Claims 1 or 2, **characterized in that** the antenna beam (2) is off-bore sighted successively in two directions.

4. Radar according to any one of Claims 1 or 2, **characterized in that** the antenna beam (2) is off-bore sighted successively in three directions.

5. Radar according to any one of the preceding claims, **characterized in that** the off-bore sighting angle of the antenna beam (2) is of the order of the width of the beam at 3 dB, $\theta_{3dB}$.

6. Radar according to any one of the preceding claims, **characterized in that** the complex coefficient is $e^{j\Delta\varphi_i}$ where $\Delta\varphi_i = 2\pi\,Fd_i\,T_R$, $\tau$ being the frequency of a Doppler filter of order i and $\tau$ the delay between the two channels $S_1$ and $S_2$.

7. Radar according to any one of the preceding claims, **characterized in that** a synthetic channel is a difference channel $\Delta$ obtained by differencing the first synthetic channel ($S_1$) and the second extrapolated synthetic channel ($S_2$).

8. Radar according to any one of the preceding claims, **characterized in that** a synthetic channel is a sum channel $\Sigma$ obtained by summing the first synthetic channel ($S_1$) and the second extrapolated synthetic channel ($S_2$).

9. Radar according to any one of the preceding claims, **characterized in that** operating in air-to-ground mode, it eliminates the ground clutter by spatio-temporal filtering on the basis of at least one synthetic deviation measurement channel.

10. Radar according to Claim 3, **characterized in that** it comprises an endoclutter deviation measurement channel and an exoclutter deviation measurement channel.

**Patentansprüche**

1. Radar mit synthetischem Abweichungsmesskanal (synthetischen Abweichungsmesskanälen) mit Dopplerauflösung-Verarbeitungsmitteln, das mit einer Antenne (1) ausgestattet ist, die mindestens einen Sende- und Empfangskanal für Signale (5) aufweist, **dadurch gekennzeichnet, dass** der Antennenstrahl (2) in n verschiedene Richtungen abgelenkt wird ($\theta_k$, $\theta_{k+1}$, $\theta_{k+2}$, ..., $\theta_{k+n}$) wobei der Strahl von einer Rekurrenz zur nächsten abgelenkt wird, wobei ein synthetischer Kanal ($S_1$, $S_2$, ..., $S_n$) die in einer bestimmten Richtung empfangenen Signale enthält, wobei ein synthetischer Abweichungskanal durch Kombination eines ersten synthetischen Kanals ($S_1$) und eines zweiten extrapolierten synthetischen Kanals ($S_2$) erhalten wird, wobei die Extrapolation des zweiten Kanals ($S_2$) im Frequenzbereich durchgeführt wird, indem das in jedem Dopplerfilter erhaltene Ergebnis mit einem komplexen Koeffizienten multipliziert wird, der von der Ordnung i des Filters und der Verzögerung $\tau$ zwischen den beiden synthetischen Kanälen ($S_1$, $S_2$) abhängt, wobei die Anfänge der Zeiten für die Berechnung der beiden Reihen von Filtern, die je einem Kanal zugeordnet sind, um diese Verzögerung $\tau$ verschoben sind.

2. Radar nach Anspruch 1, **dadurch gekennzeichnet, dass** der Antennenstrahl (2) beim Empfang abgelenkt wird.

3. Radar nach einem der Ansprüche 1 oder 2, **dadurch gekennzeichnet, dass** der Antennenstrahl (2) nacheinander in zwei Richtungen abgelenkt wird.

4. Radar nach einem der Ansprüche 1 oder 2, **dadurch gekennzeichnet, dass** der Antennenstrahl (2) nacheinander in drei Richtungen abgelenkt wird.

**5.** Radar nach einem der vorhergehenden Ansprüche, **dadurch gekennzeichnet, dass** der Ablenkwinkel des Antennenstrahls (2) in der Größenordnung der Breite des Strahls bei 3dB, $\theta_{3dB}$ liegt.

**6.** Radar nach einem der vorhergehenden Ansprüche, **dadurch gekennzeichnet, dass** der komplexe Koeffizient $e^{j\Delta\varphi_i}$ ist, wobei $\Delta\varphi_i = 2\pi \, Fd_i \, T_R$, $\tau$ die Frequenz eines Dopplerfilters der Ordnung i und $\tau$ die Verzögerung zwischen den beiden Kanälen $S_1$ und $S_2$ ist.

**7.** Radar nach einem der vorhergehenden Ansprüche, **dadurch gekennzeichnet, dass** ein synthetischer Kanal ein Differenz-Kanal $\Delta$ ist, der durch die Differenz zwischen dem ersten synthetischen Kanal ($S_1$) und dem zweiten, extrapolierten synthetischen Kanal ($S_2$) erhalten wird.

**8.** Radar nach einem der vorhergehenden Ansprüche, **dadurch gekennzeichnet, dass** ein synthetischer Kanal ein Summen-Kanal $\Sigma$ ist, der durch die Summe des ersten synthetischen Kanals ($S_1$) und des zweiten, extrapolierten synthetischen Kanals ($S_2$) erhalten wird.

**9.** Radar nach einem der vorhergehenden Ansprüche, **dadurch gekennzeichnet, dass** er beim Luft-Boden-Betrieb den Boden-Clutter durch raumzeitliche Filterung ausgehend von mindestens einem synthetischen Abweichungsmesskanal eliminiert.

**10.** Radar nach Anspruch 3, **dadurch gekennzeichnet, dass** er einen Endoclutter-Abweichungsmesskanal und einen Exoclutter-Abweichungsmesskanal aufweist.

Fig. 1

Fig. 2

EP 1 522 871 B1

Fig. 3

**Fig. 4**

**Fig. 5**

Fig. 6

Fig. 7

Fig. 8

$S_1(f)$

81

f

**Fig. 9a**

$S_2(f)$

82

f

**Fig. 9b**